Europäisches Patentamt

European Patent Office

Office européen des brevets

(19)

(11) Numéro de publication : **0 401 925 B1**

(12) **FASCICULE DE BREVET EUROPEEN**

(45) Date de publication du fascicule du brevet :
**02.03.94 Bulletin 94/09**

(51) Int. Cl.$^5$ : **G02F 1/015**, G02F 1/29,
G02F 3/00

(21) Numéro de dépôt : **90201419.0**

(22) Date de dépôt : **05.06.90**

(54) **Dispositif semiconducteur intégré incluant un commutateur opto-électronique.**

(30) Priorité : **09.06.89 FR 8907660**

(43) Date de publication de la demande :
**12.12.90 Bulletin 90/50**

(45) Mention de la délivrance du brevet :
**02.03.94 Bulletin 94/09**

(84) Etats contractants désignés :
**DE FR GB**

(56) Documents cités :
**WO-A-84/03363
IEEE JOURNAL OF QUANTUM ELECTRONICS,
vol. QE-21, no. 9, septembre 1985, pages
1462-1476, IEEE, New York, US; D.A.B. MILLER
et al.: "The quantum well self-electrooptic
effect device: Optoelectronic bistability and
oscillation, and self-linearized modulation"**

(56) Documents cités :
**J. APPLIED. PHYS., vol. 65, no. 3, 1 janvier
1989, pages 927-934, American Institute of
Physics; M. CHMIELOWSKI et al.:
"Multiple-quantum-well vertical light guide
switch"
CONFERENCE ON LASERS AND ELECTRO-
OPTICS, TECHNICAL DIGEST SERIES, Anaheim, CA, 25-29 avril 1988, vol. 7, pages
180-182, WE4; Y. CHEN et al.: "Nonlinear alloptical modulation in a GaAs/AlGaAs multiple
well vertical directional coupler"**

(73) Titulaire : **ALCATEL ALSTHOM RECHERCHE
Société Anonyme
Route de Nozay
91460 Marcoussis (FR)**

(72) Inventeur : **Cavailles, Jean-Aristide
Société Civile SPID, 209 rue de l'Université
F-75007 Paris (FR)**

(74) Mandataire : **Dalsace, Michel et al
c/o Sospi 14-16, rue de la Baume
F-75008 Paris (FR)**

EP 0 401 925 B1

Jouve, 18, rue Saint-Denis, 75001 PARIS

## Description

L'invention concerne un dispositif semiconducteur intégré formant un commutateur opto-électronique qui comprend :

- d'une part une structure de coupleur directif dans laquelle l'un des guide reçoit la puissance lumineuse d'entrée et l'autre guide est formé de multipuits quantiques, structure dont les dimensions sont telles qu'à l'état statique le commutateur est dans l'état croisé,
- et d'autre part des moyens de commande de la commutation.

L'invention concerne également des dispositifs semiconducteurs intégrés incluant des matrices de commutation réalisées au moyen de tels commutateurs.

L'invention trouve son application dans le domaine des télécommunications par exemple.

Un coupleur opto-électronique de structure verticale est déjà connu de l'état de la technique par la publication intitulée "Quantum well wave-guide coupler" par Dietrich W. Langer & Marech Chmielowski dans "Superlattices, Microstructures and Micro-devices" publication qui reprend les exposés de la "4th International Conference on Superlattices, Microstructures and Micro-devices, TRIESTE, ITALY, 8-12 August 1988".

Ce commutateur connu comprend un substrat de type $N^+$ en GaAs sur la face arrière duquel est disposé un contact électrique ; une couche inférieure de confinement en $Ga_{0,2}Al_{0,8}As$, d'indice de réfraction 3,136 ; un premier guide de lumière formé de couches alternées de GaAs/GaAlAs pour constituer une structure de multipuits quantiques (MQW) ; une couche de séparation en $Ga_{0,57}Al_{0,43}As$ d'indice de réfraction 3,355 ; un second guide de lumière formé de $Ga_{0,65}Al_{0,35}As$ d'indice de réfraction 3,38 et une couche supérieure de confinement de $Ga_{0,2}Al_{0,8}As$ d'indice de réfraction 3,136 couverte par une seconde électrode pour pouvoir appliquer une tension qui commande la commutation entre les deux guides.

Le second guide, c'est-à-dire celui qui se trouve dans la partie supérieure du dispositif et le plus loin du substrat de type $N^+$, est donc formé de matériau ternaire, disposé entre deux couches également de matériau ternaire mais d'indice plus faible ; alors que le premier guide est celui qui est formé d'une structure de multipuits quantiques (MQW).

Ce dispositif connu présente une longueur calculée en fonction des indices des matériaux et de l'épaisseur de la couche de séparation pour que, en l'absence de tension appliquée entre les deux électrodes, toute la lumière injectée dans le second guide de composition ternaire passe dans le premier guide de structure MQW et sorte à l'extrémité de ce guide. Inversement, lorsqu'une tension est appliquée entre les électrodes, alors l'indice de réfraction de la structure MQW change et la lumière reste confinée dans le guide d'entrée, c'est-à-dire le second guide de composition ternaire.

L'avantage obtenu par l'utilisation d'une structure MQW pour faire l'un des guides est que, du fait des propriétés quantiques spécifiques liées au matériau, la variation de l'indice de réfraction en fonction de la tension appliquée est beaucoup plus grande que s'il s'agissait d'un guide de composition ternaire ordinaire. Donc pour obtenir la commutation, on peut utiliser à la fois des dispositifs de longueur de couplage moins grande et leur appliquer des tensions moins fortes. Ainsi, les dispositifs obtenus présentent une compatibilité accrue avec les circuits intégrés, puisque leur surface est plus petite et leur consommation moindre.

Ce dispositif connu présente cependant comme principal inconvénient le fait de devoir recourir, pour commander la commutation, à une commande extérieure.

Il est encore connu de l'état de la technique une diode PIN dont la région intrinsèque est formée d'une structure de multipuits quantique (MQW). Une telle diode est décrite dans la publication intitulée "The Quantum Well Self Electro-Optic Effect Device" par David A.B. MILLER et alii dans "IEEE Journal of Quantum Electronics, Vol. QE-21, N°9, September 1985".

Ce document décrit une diode PIN formée successivement d'un substrat en GaAs de type N ; d'une couche en GaAs de type N pour former un contact de type N ; d'une région de super-réseau (SL) formée de 50 couches alternées de GaAs (28,5Å) et de GaAlAs (68,5Å), les 20 premières de ces couches étant dopées N ; d'une structure de multipuits quantiques (MQW) constituant la région intrinsèque de la diode et composée de 50 couches alternées de GaAs (95Å) et de GaAlAs (98Å), les 20 dernières de ces couches étant dopées P et recouvertes d'un anneau en or pour former l'électrode de type P.

Toutes ces couches forment un MESA, noyé dans une résine époxy. Un fil conducteur constitue le contact avec l'anneau d'or, et l'ensemble est couvert d'un substrat en saphir. Le dispositif prend le nom abrégé de QWSEED (de l'anglais "Quantum Well Self Electrooptic Device").

Ce dispositif reçoit d'une part un rayonnement perpendiculaire aux couches, passant dans le centre de l'anneau d'or, et d'autre part une tension qui peut être appliquée en direct ou en inverse entre les électrodes.

Cette publication enseigne que lorsqu'on envoie un rayonnement perpendiculairement à la structure MQW, pour une tension de polarisation V = 0, le dispositif présente en fonction de l'énergie eV photonique proportionnelle à $1/\lambda$, où $\lambda$ est la longueur d'onde du rayonnement, deux pics d'absorption. D'abord un pic de valeur élevée pour une longueur d'onde élevée ou une plus basse énergie de photon correspondant à l'exciton dit de "trou lourd", puis un pic de valeur plus basse pour une longueur d'onde moins élevée ou une plus grande énergie de photon, correspondant à l'exciton dit de "trou léger".

Lorsqu'on applique à la diode PIN ainsi formée, une tension de polarisation en inverse, ces pics se déplacent dans le sens où ils apparaissent pour des longueurs d'onde plus grandes ou des énergies de photon moins fortes.

Si l'on choisit une longueur d'onde de fonctionnement intermédiaire pour le rayonnement appliqué sur la photodiode, et si l'on fait varier la valeur de la polarisation inverse, on obtient alors une absorption dans la structure MQW qui augmente d'abord lorsque la valeur de la polarisation augmente, qui passe par un maximum, puis qui redécroît si l'on continue à augmenter la valeur de cette polarisation.

Du fait que la tension qui traverse le système influe sur l'absorption de la lumière par la structure MQW, lorsque le flux de lumière est injecté perpendiculairement aux couches, elle influe donc sur le photocourant. Ceci montre qu'il existe en fonction de la tension une région de photoconductance négative. Ainsi une contre-réaction est établie.

Ce document enseigne que ce phénomène de conductance négative conduit à plusieurs possibilités : d'une part l'hystérésis liée à ce phénomène permet d'obtenir par contre-réaction positive un système bistable et donc un effet mémoire ; d'autre part le système peut aussi fonctionner en oscillateur, et si l'on applique une tension de polarisation sinusoïdale entre les électrodes, la lumière est modulée en puissance à la sortie de la diode PIN.

Enfin par contreréaction négative, le comportement est différent : on obtient une modulation autolinéarisée.

La présente invention a pour but principal de proposer un commutateur optoélectronique qui est muni de moyens d'auto-aiguillage et qui peut notamment être commandé optiquement.

Selon l'invention, ce but est atteint au moyen d'un dispositif tel que décrit dans le préambule en outre caractérisé en ce que :
- d'une part la structure comprend des couches formant au moins une structure PIN dans laquelle le guide formé de multipuits quantiques constitue une région intrinsèque I,
- et d'autre part les moyens de commande incluent des moyens de polarisation électrique en inverse de la structure PIN agissant en contre réaction pour obtenir que la commutation d'un état dans l'autre soit initiée par un changement de niveau de la puissance lumineuse injectée dans le guide d'entrée.

L'avantage inhérent au dispositif selon l'invention est que la commande de commutation ne dépend que de la puissance lumineuse d'entrée et que le circuit électrique pour polariser la structure PIN est beaucoup plus simple qu'un circuit de commande électrique de commutation classique ayant la même propriété.

L'invention sera mieux comprise à l'aide de la description suivante illustrée par les figures annexées dont :
- la figure 1a qui représente une structure verticale pour former un commutateur optoélectronique selon l'invention ;
- les figures 1b, 1c et 1d, qui représentent des variantes de cette structure verticale pour réaliser un commutateur optoélectronique selon l'invention ;
- la figure 2a qui représente un circuit de polarisation applicable au commutateur opto électronique selon l'invention pour réaliser une commande en tension ;
- la figure 2b qui représente d'une part l'absorption $\alpha$ et d'autre part la quantité de lumière détectée Q dans le multipuits quantique MQW, en fonction de la tension V inverse aux bornes de la structure.
- la figure 2c qui représente les courbes de la puissance lumineuse de sortie dans chacun des guides du commutateur optoélectronique en fonction de la tension V ;
- la figure 2d qui représente la quantité de courant photogénéré dans la structure à multipuits quantiques en fonction de la tension de polarisation ;
- la figure 2e qui représente d'une part la détectivité S (courbe C) et d'autre part les droites de charge du circuit de polarisation (courbes $d_0$ à $d_3$) en fonction de V ;
- la figure 2f qui représente les rapports des puissances de sortie $\phi_1$ et $\phi_2$ dans chacun des guides en fonction de la puissance d'entrée ;
- la figure 3a qui représente une variante du circuit de polarisation du commutateur selon l'invention pour réaliser une commande en courant ;
- les figures 3b et 3c qui représentent les puissances de sortie respectivement $\phi_1$ et $\phi_2$ en fonction des rapports des puissances d'entrée $\phi_0$ au courant $I_0$ dans un tel système ;
- la figure 4a qui représente une autre variante du système de polarisation du commutateur selon l'invention pour réaliser une commande en courant ;
- la figure 4b qui représente schématiquement une mise en oeuvre de ce dispositif de polarisation ;
- les figures 5 qui représentent le séquencement de signaux transportés par le commutateur dans le cas

EP 0 401 925 B1

d'une polarisation en tension appliquée en inverse sur la structure PIN.
- les figures 6 qui représentent le séquencement de signaux transportés par le commutateur dans le cas où une commande en courant est appliquée sur la structure PIN.
- la figure 7 qui représente un commutateur selon l'invention de structure horizontale ;
- la figure 8 qui représente un élément de commutation réalisé au moyen d'un commutateur vertical selon l'invention, pour faire une matrice de commutation.

**Exemple de réalisation I**

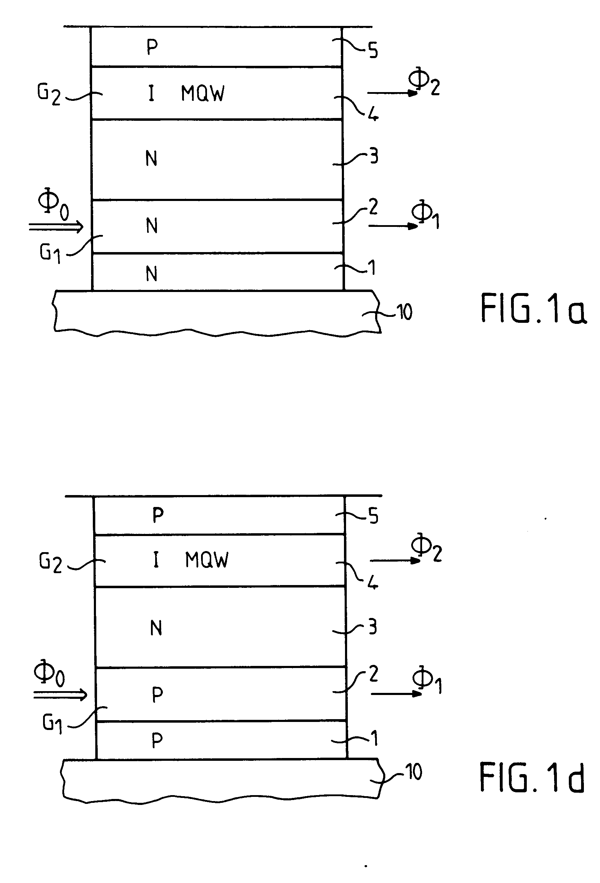

Tel que représenté sur la figure 1a, pour faire un commutateur optoélectronique intégré, on réalise donc une structure PIN à multipuits quantiques, munie d'un dispositif de polarisation formant une contre-réaction, au moyen de couches de type N directement disposées au-dessus d'un substrat 10 qui pourra éventuellement être choisi semi-isolant, surmontée d'une région intrinsèque I constituée de multipuits quantiques (MQW), et d'une couche de type P.

Puis on adapte cette structure PIN pour réaliser un commutateur optoélectronique à structure verticale. Ce commutateur est par exemple lui-même constitué à partir du substrat 10 d'une première couche de confinement 1, d'un premier guide de lumière $G_1$ en un matériau 2, d'une couche de séparation 3, d'un second guide de lumière $G_2$ en un matériau 4, et d'une seconde couche de confinement.

Pour réussir l'adaptation de la structure PIN au commutateur optoélectronique, la première couche de confinement 1 est de type N, le matériau 2 pour constituer le premier guide de lumière $G_1$ est de type N, la couche de séparation 3 est de type N, le matériau 4 pour constituer le second guide de lumière $G_2$ coïncide avec la région intrinsèque I formée de multipuits quantiques, et la seconde couche de confinement est de type P. La couche 5 de type P et la couche 1 de type N sont munies de contacts, respectivement P et N, réalisés comme il est connu de l'homme du métier au moyen de couches ohmiques.

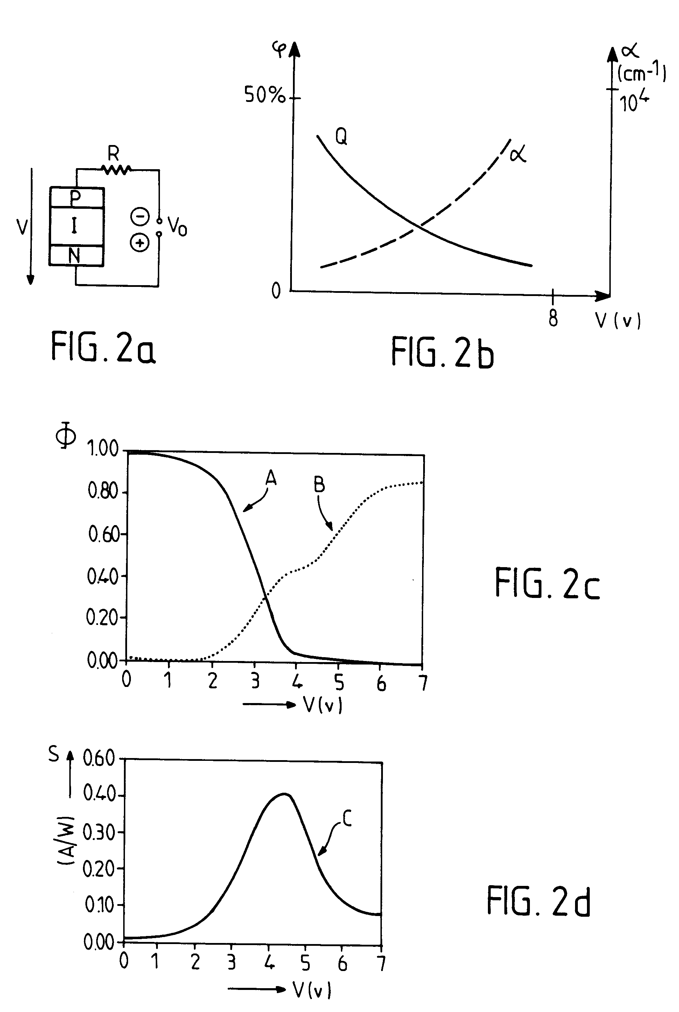

La puissance lumineuse d'entrée $\phi_0$ est injectée dans le guide $G_1$ de type N. Entre les contacts N et P est monté un circuit électrique fournissant aux bornes de la diode PIN constituée selon l'invention, une polarisation en inverse. De tels circuits sont représentés à titre d'exemple sur les figures 2a, 3a, 4a.

Dans une mise en oeuvre de l'invention, la première couche 1 de confinement est en un matériau ternaire III-V tel que par exemple GaAlAs, ainsi que le matériau 2 pour le premier guide $G_1$, la couche de séparation 3 et la seconde couche de confinement 5. Dans ces couches, la concentration en aluminium (Al) est alors choisie de telle sorte que l'indice de réfraction des couches de confinement et de séparation soit plus faible que celui des guides de lumière. Cet effet est obtenu en choisissant par exemple la concentration en aluminium (Al) dans les couches de confinement 1 et 5 et de séparation 3 :
$$x_0 \simeq 0,16$$
et en choisissant la concentration en aluminium (Al) dans la couche ternaire 2 formant le guide $G_1$ de l'ordre de :
$$x_1 \simeq 0,11$$
Les multipuits quantiques (MQW) 4 pour former le guide $G_2$ peuvent être constitués d'une alternance de 30 couches de matériau ternaire et 30 couches de matériau binaire de composés III-V, tels que par exemple pour les couches binaires l'arséniure de gallium et pour les couches ternaires l'arséniure de gallium et d'aluminium (GaAs/GaAlAs). Chaque couche aura favorablement une épaisseur de l'ordre de 10 nm. La composition du matériau ternaire sera favorablement $Ga_{0,7}Al_{0,3}As$.

Pour véhiculer une onde monomode transverse, l'épaisseur totale des couches 2 et 4 pour former les guides $G_1$ et $G_2$ sera de l'ordre de 0,4 à 0,7$\mu$m, et favorablement 0,6$\mu$m. L'épaisseur des première et seconde couches 1, 5 de confinement n'est pas critique, et peut être de l'ordre de 0,5 à 1$\mu$m.

L'épaisseur D de la couche de séparation 3 est déterminée en fonction de la longueur L de l'élément de commutation pour obtenir que, à l'état statique, c'est-à-dire en l'absence de toute polarisation V appliquée entre les contacts N et P (V = 0), toute la puissance lumineuse $\phi_0$ appliquée à l'extrémité dite entrée du guide $G_1$ soit transférée au cours de ce trajet L, dans le guide $G_2$ à travers la couche de séparation 3.

Le commutateur est alors dit être dans l'état croisé.

On notera que, à partir de là, le fonctionnement du dispositif selon l'invention est complètement différent de celui du commutateur connu de l'état de la technique, ou du fonctionnement de la diode PIN également connue de l'état de la technique.

En effet, en ce qui concerne le commutateur connu de l'état de la technique, d'abord il ne peut être commandé que de l'extérieur, ce qui nécessite un circuit supplémentaire pour effectuer cette commande, alors que dans le dispositif selon l'invention, la commutation est induite par une variation d'intensité lumineuse, donc par le signal lumineux lui-même ; et ensuite, l'ordre dans lequel sont réalisées les couches du circuit connu fait qu'il ne pourrait fonctionner selon l'invention car on ne pourrait pas l'adapter en structure de type PIN.

4

En ce qui concerne la diode PIN connue, son fonctionnement est dû à un principe différent de celui qui est mis en oeuvre dans le commutateur selon l'invention.

En effet, comme on l'a vu précédemment, dans la diode connue qui est éclairée perpendiculairement aux couches, l'absorption dans les multipuits quantiques, considérée pour une longueur d'onde donnée, en fonction de la tension de polarisation appliquée en inverse aux bornes de cette diode, par exemple au moyen d'un circuit tel que représenté sur la figure 2a, montre deux pics. La partie décroissante de ces courbes au delà du premier maximum correspond à une région de photoconductance négative. Au contraire selon l'invention et tel qu'illustré par la figure 2b, la courbe en pointillés représentant l'absorption $\alpha$ ($cm^{-1}$) dans les multipuits quantiques en fonction de la polarisation appliquée en inverse V(v) montre une augmentation monotone. Cela est dû au fait que l'on choisit de travailler dans une zone ou l'énergie photonique est fixée à environ 30 meV en dessous du seuil de la première transition d'énergie de l'exciton dit de trou lourd, énergie à laquelle le puits quantique est peu absorbant.

D'autre part dans le dispositif selon l'invention, du fait de l'existence des deux guides de lumière couplés, l'absorption n'est pas le seul phénomène qui entre en jeu pour établir une contre-réaction lorsqu'une tension de polarisation est appliquée en inverse sur la diode PIN.

En effet, il faut tenir compte aussi de la quantité de lumière détectée par le guide $G_2$ formé de multipuits quantiques (MQW). La courbe en trait plein de la figure 2b montre l'évolution de cette quantité de lumière Q en fonction de la même tension de polarisation V.

Les courbes $\alpha$ et Q de la figure 2b, conduisent à montrer que le dispositif fonctionne selon les principes exposés ci-après, en accord avec une propriété des multipuits quantiques dite effet "Quantun Confine Stark Effect" (QCSE) et cependant différents des principes qui régissent le fonctionnement de la diode PIN ou du commutateur connu, lequel fonctionne en modulateur.

Les propriétés optiques du multipuits quantique (MQW) sont dépendantes de la tension appliquée en inverse aux bornes de la jonction PIN car elles sont influencées par le champ électrique créé perpendiculairement aux couches.

Tel qu'illlustré par la figure 2c, et comme dans le premier dispositif de commutation décrit au titre d'état de la technique, le système est conçu pour que, lorsque la tension de polarisation est nulle (V=0) dû au choix de la longueur de couplage L, toute la lumière qui entre dans le premier guide $G_1$ passe dans le second guide $G_2$ formé de multipuits quantiques (MQW) : on est alors dans l'état croisé, comme illustré par les courbes de la figure 2c. La courbe A en trait plein représente la puissance $\phi_2$, relative à une puissance d'entrée $\phi_0$, constante, qui sort du guide $G_2$ en fonction de la valeur de la tension de polarisation V en volts. La courbe B en traits pointillés représente la puissance $\phi_1$, relative à la puissance d'entrée $\phi_0$, qui sort du guide $G_1$ en fonction de la valeur de la tension de polarisation V en volts.

Quand on augmente la tension de polarisation, on change les propriétés optiques du guide formé de multipuits quantiques (MQW) et pour des tensions V suffisamment élevées, toute la lumière reste dans le guide d'entrée $G_1$ (état direct), le phénomène de couplage étant modifié.

En effet, du fait de l'absorption importante des multipuits quantiques (MQW) on a intérêt à ce qu'un minimum de signal soit transporté par le guide $G_2$ aux fortes valeurs de polarisation. C'est pourquoi, on choisit la longueur de couplage pour que, aux faibles valeurs de V, ou à V = 0, le commutateur soit dans l'état croisé, et aux fortes valeurs à l'état direct.

Cela était déjà connu de l'état de la technique. Mais l'originalité de la présente invention repose sur l'existence du circuit de polarisation qui est appliqué non plus à la simple structure PIN connue, mais à la structure complexe de commutateur.

Un premier circuit de polarisation est montré sur la figure 2a, ce circuit est constitué d'une résistance R et d'une source de tension $V_0$ constante appliquée en inverse sur la diode PIN à travers la résistance. Ce circuit de polarisation impose une relation entre le courant qui circule dans le circuit et la tension aux bornes de la diode PIN qui est de la forme :

$$I = f(V) \quad (1)$$

Pour une certaine tension aux bornes du dispositif, le circuit de commande réagit pour que s'établisse une certaine intensité définie par la relation 1, et vice-versa. Or la lumière absorbée dans le multipuits quantiques (MQW) est aussi une source de courant. En effet chaque fois qu'un photon est absorbé dans les multipuits quantiques, on a création d'une paire électron-trou récoltée par le champ électrique existant dans la jonction PIN et qui crée un courant.

Si l'on considère alors la puissance lumineuse $\phi_0$ injectée dans le guide d'entrée $G_1$, la quantité de lumière Q effectivement détectée dans la région du multipuits quantiques ou second guide $G_2$ dépend de l'état du commutateur.

Si le commutateur est dans l'état direct, la région de multipuits quantiques ne détecte rien , il en résulte que $Q \simeq 0$. Si au contraire le commutateur est dans l'état croisé, la quantité de lumière Q détectée effectivement présente dans la région intrinsèque du dispositif est grande.

Ainsi le photocourant généré est à la fois proportionnel à deux facteurs :

- d'une part à l'absorption dans les multipuits quantiques (MQW) $G_2$,
- d'autre part à la quantité de lumière $Q \times \phi_0$ qui se trouve effectivement au même moment dans lesdits multipuits quantiques (MQW) $G_2$.

Le dispositif selon l'invention montre alors plusieurs types de fonctionnement. D'abord deux cas extrêmes et ensuite un cas intermédiaire.

Dans les cas extrêmes :

- ou bien l'absorption est à peu près nulle dans les MQW, le photocourant généré est très petit, et toute la lumière passe dans le guide $G_2$ ; on se trouve alors dans l'état croisé ;
- ou bien l'absorption est forte, le photocourant généré est encore très petit car toute la lumière reste dans le guide $G_1$.

Dans le cas intermédiaire :

- il s'établit un compromis entre l'absorption $\alpha$ dans les MQW, c'est à dire la capacité des MQW à détecter la lumière, et la fraction de la puissance lumineuse susceptible d'être détectée.

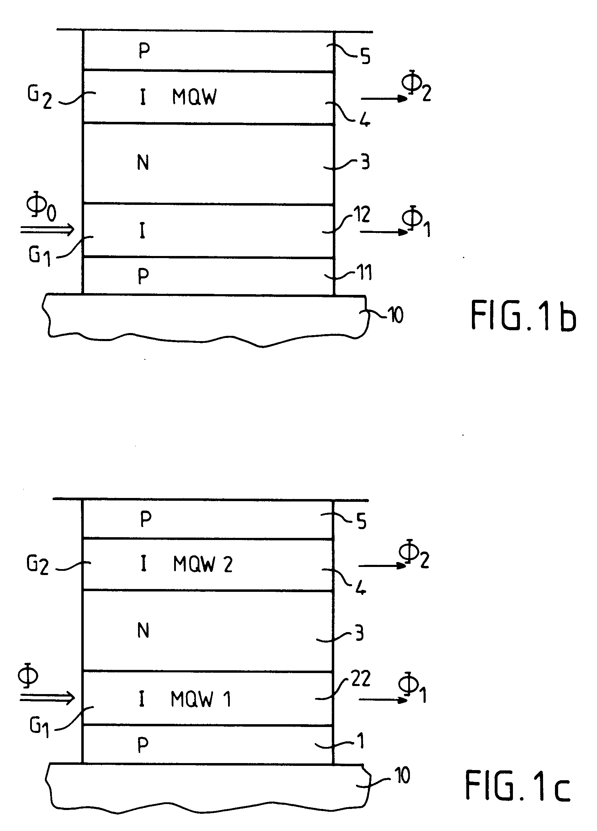

Le rapport de la quantité de courant photogénéré à la puissance optique en entrée $\phi_0$, appelée détectivité $S = I/\phi_0$, est alors proportionnel à la fois à l'absorption $\alpha$ et à la quantité Q. Donc la détectivité S est la composition des deux courbes représentant $\alpha$ et Q de la figure 1b. Elle est alors de la forme représentée par la courbe C de la figure 2d, c'est-à-dire qu'elle présente un maximum en fonction de la tension de polarisation V. La détectivité générée est donc une fonction de V. Elle est notée S(V).

On obtient alors comme dans l'état de la technique, une région correspondant à la partie décroissante de la courbe S(V) où la photoconductance est négative, mais l'origine du phénomène physique est différente, du fait qu'il y a ici composition de l'absorption $\alpha$ et de la quantité Q, et non pas l'effet de l'absorption seule comme dans l'art antérieur. Le courant photogénéré I est alors à la fois proportionnel à la puissance $\phi_0$ injectée et à la détectivé S(V) :

$$I = S(V) \times \phi_0 \quad (2)$$

Comme d'autre part, le courant dû au circuit de polarisation est donné par la relation (1), l'état du commutateur sera donné par la composition de ces deux fonctions (1) et (2) :

$$I = f(V) \quad (1)$$
$$I = S(V) \times \phi_0 \quad (2)$$

Si le circuit de polarisation est formé d'une façon simple, comme représenté sur la figure 2a, d'une alimentation électrique de tension $V_0$ et d'une résistance R montées en série, le courant I dans la résistance R en tenant compte de la tension d'alimentation $V_0$ et de la tension V aux bornes de la diode PIN est donné par la relation :

$$I = (V_0 - V)/R \quad (3)$$

D'autre part la quantité de courant photogénéré S(V) est donné par :

$$S(V) = I/\phi_0 \quad (4)$$

à partir de la relation (2)

L'état du système sera donc donné par la résolution du système :

$$S(V) = (V_0 - V)/R\phi_0 \quad (5)$$

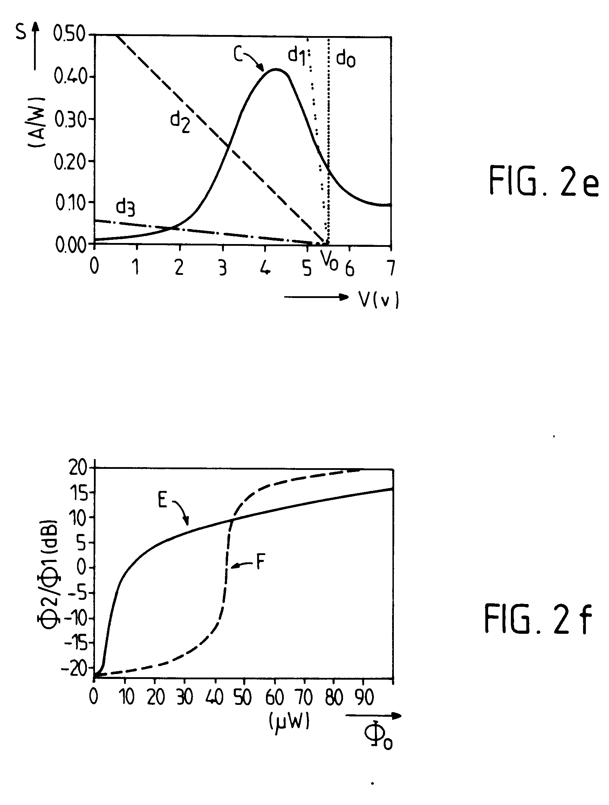

La figure 2e montre différentes droites $d_0$, $d_1$, $d_2$, $d_3$ représentant :

$(V_0 - V)/R\phi_0$ pour différentes valeur $\phi'_0$, $\phi''_0$, $\phi'''_0$ etc...de la puissance d'entrée $P_0$.

Ainsi pour ce circuit de polarisation de la figure 2a et pour chaque valeur de la puissance d'entrée $\phi_0$, il existe une droite $d_0$, $d_1$, $d_2$, $d_3$ etc... dont la pente est fonction de cette puissance d'entrée, la tension d'alimentation continue $V_0$ et la résistance R étant des constantes.

En choisissant

$V_0 =$    5,5 Volts

$R =$    $1M\Omega$

pour différentes valeurs de la puissance lumineuse d'entrée $\phi_0$, on obtient, représentées sur la figure 2e :

la droite $d_0$ pour $R\phi_0 = 0$

la droite $d_1$ pour $R\phi_0 = 1$

la droite $d_2$ pour $R\phi_0 = 10$

et la droite $d_3$ pour $R\phi_0 = 100$.

La résolution du système (5) peut se faire graphiquement à l'aide des courbes de la figure 2e par l'intersection de l'une des courbes $d_0$, $d_1$, $d_2$, $d_3$ et de la courbe C représentant S(V). Cette intersection permet de lire graphiquement la valeur de la tension V qui se trouve aux bornes de la diode PIN.

La tension V lue sur la figure 2e à l'intersection de la courbe C et des droites $d_1$, $d_2$, $d_3$, $d_4$ est reportée sur la figure 2c et permet de connaître l'état du comutateur pour cette valeur de la tension V. Le commutateur se trouve alors dans l'état direct ou croisé, et cet état dépend uniquement de la puissance $\phi_0$ injectée à l'entrée.

La figure 2f représente les rapports $\phi_2/\phi_1$ des puissances lumineuses recueillies respectivement en sortie du guide $G_2$ (MQW) et du guide $G_1$, en fonction de la puissance lumineuse $\phi_0$ injectée dans le guide d'entrée $G_1$ dans le cas où il n'est pas MQW. Cette courbe a été tracée dans l'exemple où :

R =      1 M$\Omega$

$V_0$ =      5,5 Volts

avec le circuit de polarisation de la figure 2a.

Cette figure 2f montre sur la courbe E en trait plein qu'une puissance injectée de 100 $\mu$W permet d'obtenir 15dB de différence entre la sortie de $G_2$ et la sortie de $G_1$.

La courbe F en pointillée sur la même figure 2f a été tracée pour une valeur R = 100 K$\Omega$. Dans l'un comme dans l'autre cas (courbe E ou courbe F) on constate que la transition qui permet de passer de l'état croisé à l'état direct est très abrupte.

On optimise alors le dispositif selon l'invention en choisissant une valeur de la résistance R appropriée, en fonction de la puissance $\phi_0$.

Dans une variante, le circuit de polarisation de la structure PIN pour obtenir la contreréaction, est une alimentation en courant représentée par exemple sur la figure 3a. Dans ce cas :

$I(V) = I_0$ si $V < V_0$

$I(V) = 0$ si $V > V_0$

On choisira par exemple V = 7 Volts.

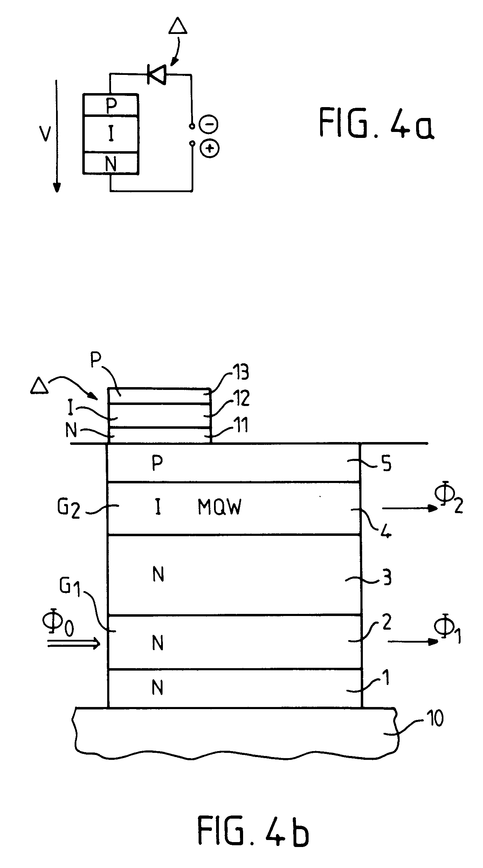

Ceci peut être obtenu au moyen d'une photodiode externe $\Delta$ disposée en série avec une alimentation en tension continue comme montré sur la figure 4a. Le point de polarisation du système est déterminé par :

$$S(V) = I(V)/\phi_0 \quad (6)$$

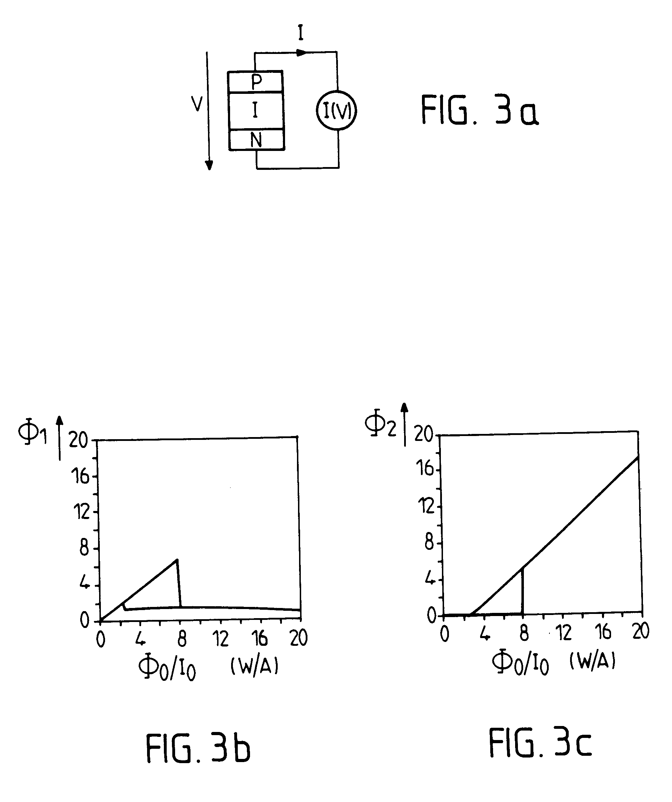

Le nombre de solutions de cette équation dépend de la valeur du rapport $I_0/\phi_0$. Ainsi, si $I_0/\phi_0$ est supérieur à $S(V)$, alors $V = V_0$ et le commutateur est dans l'état direct. Si $I_0/\phi_0$ est plus petit que $S(V_0)$, le seul état stable est la région de faible polarisation qui entraîne que le commutateur est dans l'état croisé. Entre ces deux extrêmes, le système est bistable. Ceci est montré sur les figure 3b et 3c où l'on a représenté les puissances de sortie $\phi_1$ et $\phi_2$ respectivement du guide $G_1$ et du guide $G_2$ en fonction du rapport $\phi_0/I_0$, pour une valeur fixe de $I_0$.

La bistabilité peut être induite de deux façons, soit en changeant $I_0$, soit en changeant $\phi_0$. Dans le cas du contrôle par la puissance optique $\phi_0$, les puissances de commutations peuvent être ajustées par $I_0$, mais sont limitées par le courant d'obscurité de la jonction PI-N. Des commutations avec des puissances de quelques $\mu$W peuvent néanmoins être aisément réalisées.

Tel que représenté sur la figure 4b, dans un exemple de mise en oeuvre de cette variante du dispositif de polarisation, une diode PIN est réalisée en surface de la dernière couche de la structure verticale au moyen de couches de matériaux du groupe III-V, par exemple avec les mêmes matériaux que la structure de l'élément de commutation.

D'une manière générale, afin de minimiser les pertes dans l'état croisé, les calculs pour la conception des dispositifs selon l'invention sont faits pour une énergie de photon 30 meV en dessous de la première transition d'énergie d'exciton de trou lourd, énergie à laquelle le puits quantique est peu absorbant.

Il a été pris en compte que dans le cas des multipuits quantiques (MQW) réalisés au moyen d'une alternance de couches de GaAs/GaAlAs, avec la concentration en Al dans le matériau ternaire de $x_1 = 0,11$, l'indice de réfraction est environ 1% plus élevé que dans un alliage de GaAlAs équivalent.

Dans cet exemple de réalisation à une seule structure MQW, l'épaisseur de la couche de séparation était de préférence      D = 1 $\mu$m

et la longueur de couplage      L = 228 $\mu$m.

L'indice de réfraction est pour une structure réalisée au moyen des matériaux GaAs et GaAlAs :

$n_1 = 3,5433$ dans le guide $G_1$ (non MQW) et

$n_0 = 3,5061$ dans les couches de confinement 1 et 5 et de séparation 3.

## EXEMPLE DE REALISATION II

Tel que représenté sur la figure 1b, dans une variante de l'invention, la structure verticale de couches de matériaux semiconducteurs pour réaliser le commutateur forme un phototransistor. A cet effet, cette structure verticale comprend :

- un substrat 10 qui peut être semi-isolant,
- une première couche de confinement 11 de type P,
- une région 12 pour former le guide $G_1$ qui reçoit la puissance lumineuse d'entrée et qui coïncide avec une première zone intrinsèque I,

- une couche de séparation 3 de type N,
- une région 4 de multipuits quantiques (MQW) pour former le second guide $G_2$ et qui coïncide avec une seconde région intrinsèque I,
- une seconde couche de confinement 5 de type P.

Les dimensions de cette structure, c'est-à-dire les indices des matériaux, l'épaisseur de la couche de séparation et la longueur de couplage L sont prévues pour qu'à l'état statique (V = 0) le commutateur soit à l'état croisé.

Les matériaux et les couches peuvent être des mêmes composés que décrit précédemment. D'une façon générale, les matériaux seront choisis de la façon suivante, en fonction du substrat pour obtenir à la fois l'accord de maille et l'indice de réfraction nécessaire au confinement :

- Si le substrat est en arséniure de gallium, les couches non MQW pour former le guide de lumière $G_1$ (région 12) pourront être ternaires, par exemple en arséniure de gallium et d'aluminium (GaAlAs) ainsi que les couches de confinement.
- Si le substrat est en phosphure d'indium (InP) les couches non MQW pour former le guide de lumière $G_1$ (région 12) pourront être ternaires ou quaternaires, par exemple en arséniure de gallium et d'indium (GaInAs) ou en un composé de gallium, indium, phosphore, arsenic (GaInAsP) ainsi que les couches de confinement.

Les structure MQW seront formées alors d'une alternance des couches binaires choisies et des couches ternaires ou quaternaires choisies.

On pourra aussi utiliser un substrat en silicium (Si) couvert d'une couche tampon pour réaliser l'accord de maille, puis d'une couche de GaAs ou d'InP qui sera alors considérée comme substrat.

Les circuits de polarisation sont les mêmes que pour le dispositif à une seule région intrinsèque, décrite précédemment et illustré par la figure 1a.

Dans cette variante, le dispositif selon l'invention présente un gain entre 10 et 100 et dans ce cas, les puissances optiques nécessaires au fonctionnement sont d'autant plus petites.

## EXEMPLE DE REALISATION III

Tel que représenté sur la figure 1c dans une autre variante de la structure verticale, cette dernière constitue, un phototransistor, comme dans l'exemple II. A cet effet cette structure verticale comprend :

- un substrat 10 qui peut être semi-isolant,
- une première couche de confinement 11 de type P,
- une région 22 de multipuits quantiques ($MQW_1$) pour former le guide $G_1$ qui reçoit la puissance lumineuse d'entrée et qui coïncide avec une première zone intrinsèque I,
- une couche de séparation 3 de type N,
- une autre région 4 de multipuits quantiques ($MQW_2$) pour former le second guide $G_2$ et qui coïncide avec une seconde région intrinsèque I,
- une seconde couche de confinement 5 de type P.

Les dimensions et caractéristiques de cette structure sont prévues pour qu'à l'état statique (V = 0) le commutateur soit à l'état croisé.

Les matériaux peuvent être les mêmes que ceux des régions correspondantes des exemples I et II.

Les circuits de polarisation déjà décrits peuvent aussi être utilisés.

Il faut noter que l'intérêt de cet exemple de réalisation réside :

- d'une part dans l'obtention d'un gain, comme dans l'exemple II,
- d'autre part dans le fait que les deux guides sont identiques, ce qui est plus facile à réaliser sur le plan technologique. Les guides montrent ainsi le même indice de réfraction. Ceci est contrebalancé par le fait que le guide $G_1$ a des pertes plus importantes lorsqu'il est réalisé en structure MQW, que lorsqu'il est réalisé en matériau ternaire comme dans l'exemple II.

## EXEMPLE DE REALISATION IV

Tel que représenté sur la figure 1d, dans une autre variante de la structure verticale, cette dernière constitue un phototransistor, comme dans les exemples II et III. A cet effet, cette structure verticale comprend :

- un substrat 10 qui peut être semi-isolant,
- une première couche de confinement 11 de type P,
- une région 32 de type P pour former le premier guide $G_1$ qui reçoit la puissance lumineuse d'entrée,
- une couche de séparation 3 de type N,
- une région 4 de multipuits quantiques (MQW) pour former le second guide $G_2$ et qui coïncide avec une

8

région intrinsèque I,
- une seconde couche de confinement 5 de type P.

Les dimensions et caractéristiques de cette structure sont prévues pour qu'à l'état statique le commutateur soit à l'état croisé.

Les matériaux pour faire les couches peuvent être les mêmes que ceux des régions correspondantes des exemples I, II et III.

Les circuits de polarisation déjà décrits peuvent aussi être utilisés.

L'intérêt de cet exemple de réalisation réside dans le fait qu'il présente un gain en courant plus élevé que dans les exemples II et III, et en particulier plus élevé que dans l'exemple II.

## EXEMPLE DE REALISATION V

Dans cet exemple de réalisation, le coupleur directif a une structure horizontale. D'une manière préférentielle, cette structure sera du type dit à rubans érigés au-dessus d'un substrat (en anglais : RIB waveguides).

A cet effet, cette structure horizontale peut être formée de :
- un substrat 10,
- une couche inférieure de confinement 31 de type N,
- une région 32 de multipuits quantiques (MQW) pour former la couche guidante G, c'est-à-dire les régions guidées $G_1$ et $G_2$, et qui coïncide avec une région intrinsèque I,
- une couche supérieure de confinement 35, de type P dans laquelle sont formés, par exemple par gravure, des rubans respectivement $R_1$ pour $G_1$ et $R_2$ pour $G_2$, rubans érigés en relief au-dessus du dispositif. Du fait de la différence d'indice qui apparaît dans la couche supérieure de confinement due à la différence d'épaisseur dans les régions des rubans $R_1$, $R_2$ et en dehors de ces régions, la lumière est guidée dans les parties de la couche guidante G qui se trouvent directement sous les rubans, donc dans les parties $G_1$ et $G_2$. Les guides de lumière $G_1$, $G_2$ sont donc directement délimités par les rubans $R_1$, $R_2$ respectivement.

Les matériaux pour réaliser une telle structure horizontale peuvent être :
- l'arséniure de gallium pour le substrat 10. Ce dernier peut être par exemple semi-isolant ou de type N ;
- une couche ternaire de GaAlAs pour la couche inférieure de confinement 31. L'épaisseur peut être favorablement 0,15 μm ;
- la structure de multipuits quantiques pour former la couche 32 guidante G peut être identique aux structures de multipuits quantiques décrites dans les exemples précédents. L'épaisseur peut être favorablement 0,5 μm ;
- une couche ternaire de GaAlAs pour la couche supérieure de confinement 35. Après gravure pour former les rubans, il restera favorablement une épaisseur de couche de confinement de 0,3 μm, et les rubans seront érigés au-dessus de la surface, d'une hauteur de 0,5 μm. Comme il a été noté précédemment, le matériau GaAlAs ternaire est choisi si le substrat est l'arséniure de gallium (GaAs). D'autres composés déjà cités sont utilisés si le substrat est en phosphure d'indium (InP).

L'intérêt de cet exemple de réalisation réside d'abord dans la simplicité de la mise en oeuvre. En effet, pour réaliser une structure horizontale, il suffit de déposer 3 couches (31, 32, 35), alors qu'il faut au minimum 5 couches pour réaliser une structure verticale.

D'autre part, le confinement latéral du faisceau induit moins de pertes par diffusion liée à la rugosité dans le cas d'un coupleur directif à structure horizontale, que dans le cas d'une structure verticale, ce qui compense le fait que la longueur L de couplage est plus grande pour la structure horizontale du fait que la distance entre les guides d'onde est en général plus grande, comme il est connu de l'homme du métier.

En outre, la structure horizontale est plus favorable pour réaliser une matrice de commutation, car les éléments de commutation sont plus faciles à réaliser.

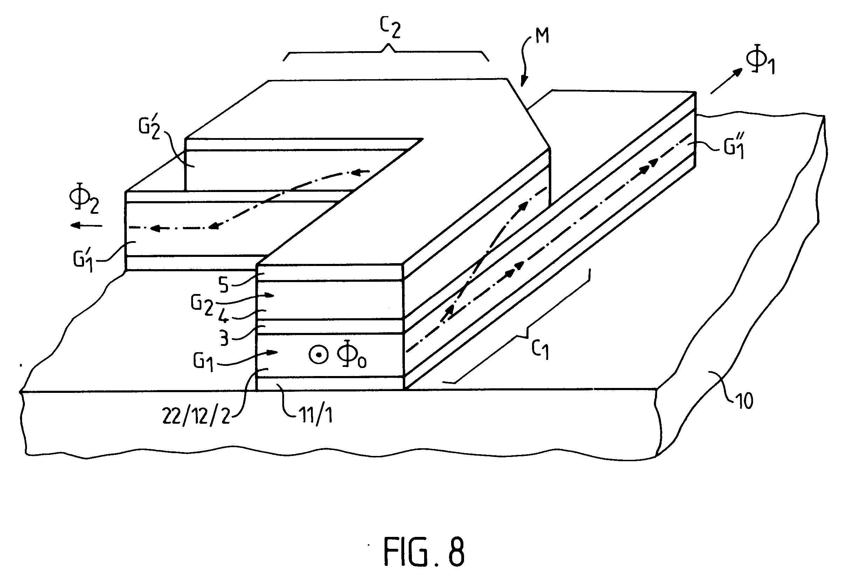

Enfin, la gravure qui permet de réaliser les rubans (RIB) de la structure horizontale est plus facile à réaliser que celle qui est nécessaire à la réalisation du confinement latéral de la structure verticale (voir la figure 8 qui montre comment l'ensemble de la structure verticale cascadable est érigée en relief sur un substrat du fait d'une gravure latérale).

Donc chacune des structures verticale et horizontale montre des avantages et des inconvénients différents. On choisira la structure verticale pour sa compacité favorable aux dispositifs intégrés à très grande échelle ; on choisira au contraire la structure horizontale pour sa facilité de mise en oeuvre et ses faibles pertes.

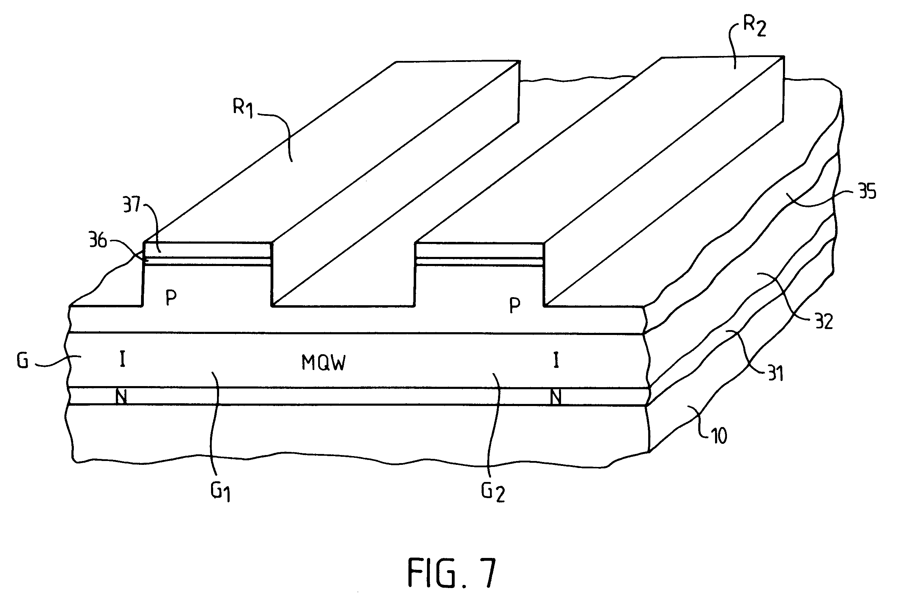

Dans l'un comme dans l'autre cas, on réalisera les contacts électriques au moyen d'une couche ou d'un plot d'un matériau formant contact ohmique :
- par exemple Ti/Pt/Au (référence 37 sur la figure 7) sur une couche de GaAs de type $P^+$ (référence 36 sur la figure 7) pour former le contact de type P ;

- par exemple Au/Ge sur une couche de GaAs de type N pour former le contact de type N.

La structure PIN simple (structure de diode = exemple I), sera de préférence commandée en tension et la structure de phototransistors (exemples II, III, IV, V) sera de préférence commandée en courant.

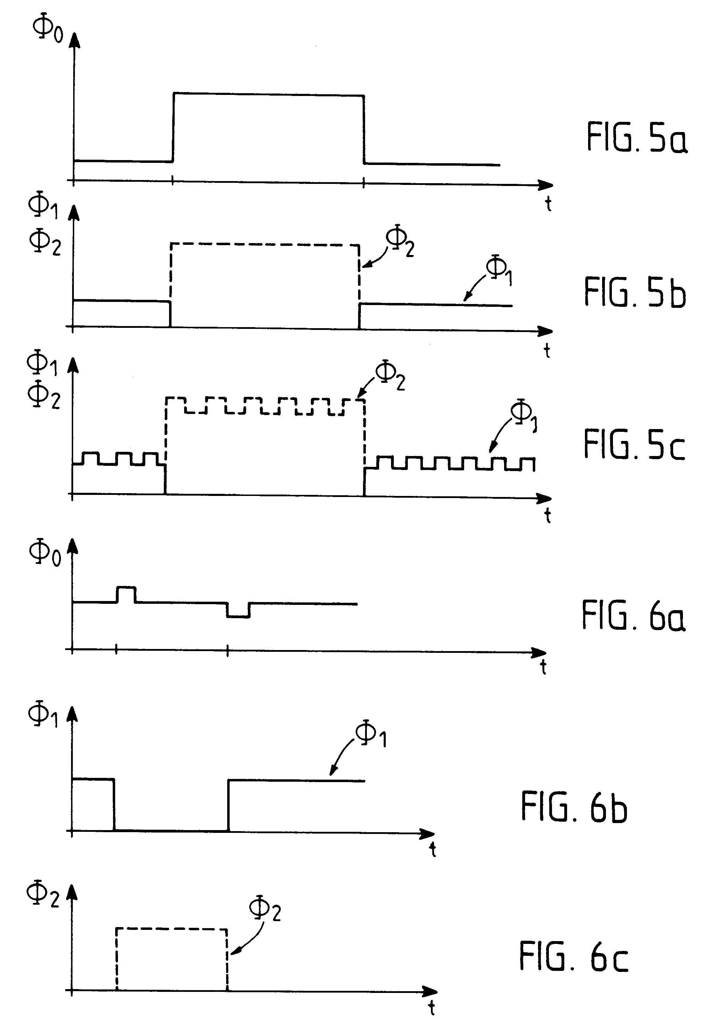

Les dispositifs selon l'invention dans la version structure PIN simple, ou dans les versions phototransistors trouvent par exemple leur application soit dans la commutation pure et simple commandée par la puissance d'entrée $\phi_0$, soit dans la commutation de signaux portés par une porteuse, comme montré sur les figures 5.

Pour une longueur d'onde donnée par exemple :

$\lambda = 865$ nm

les signaux $\phi_1$ portés par un signal de faible puissance lumineuse d'entrée $\phi_0$ représentée sur la figure 5a en fonction du temps t sortent directement dans le guide $G_1$ alors que les signaux $\phi_2$ portés par une forte puissance lumineuse d'entrée passent dans le second guide $G_2$ (figures 5b et 5c).

La commutation ne dépend que de la puissance d'entrée $\phi_0$ comme il avait été démontré par les courbes de la figure 2f.

Dans la mise en oeuvre où la polarisation de la structure PIN est une commande en courant (figures 3 et 4) on obtient un effet mémoire illustré schématiquement par les figures 6a à 6c.

La puissance d'entrée $\phi_0$ est représentée par la courbe de la figure 6a. Pour un top dans un sens appliqué à cette puissance d'entrée $\phi_0$, la sortie passe dans l'un des guides. Lorsque la puissance d'entrée $\phi_0$ revient à sa valeur initiale le signal reste dans le même guide. Pour un top dans un autre sens appliqué à la puissance d'entrée $\phi_0$, le signal passe dans l'autre guide et y reste même si la puissance d'entrée $\phi_0$ revient à sa valeur initiale (voir les figures 6b et 6c).

Dans les calculs, l'absorption dans toutes les couches a été négligée excepté dans les structure MQW.

L'invention n'est pas limitée à la réalisation dans un système GaAlAs/GaAs, mais peut être étendue par exemple au système GaInAs/InP comme il a été dit précédemment, ou encore au système GaInAsP/InP.

De même le substrat peut être de tout matériau de maille compatible, et même en silicium, par exemple muni d'une couche d'adaptation de maille, puis d'une couche par exemple de GaAs ou d'InP. Le dispositif selon l'invention est à partir de là réalisé comme il a été dit précédemment.

## EXEMPLE DE REALISATION VI

Dans cet exemple, on donne un procédé de réalisation d'un élément de commutation muni de moyens pour séparer les faisceaux des premier et second guides, dans le but de faire un élément de comImutation cascadable pouvant servir de base à la réalisation d'une matrice de commutation de Q entrées dans Q sorties.

Cet exemple est appliqué à l'une des structures verticales décrites dans les exemples I, II, III ou IV, et est illustré schématiquement par la figure 8.

Tel que représenté sur la figure 8, cet élément comprend un substrat 10 sur lequel est réalisé un premier coupleur directif $C_1$ à structure verticale comme déjà décrit.

A l'extrémité de sortie de ce coupleur directif $C_1$, c'est-à-dire après une longueur égale à la longueur de couplage L, est disposé un miroir M seulement sur le trajet du faisceau du guide supérieur, ici $G_2$. Ce miroir M peut être constitué par un flan vertical faisant un certain angle avec l'axe optique de la structure du guide. Un tel flanc vertical peut être réalisé par une gravure partielle en même temps que la gravure totale qu permet le confinement latéral des guides de la structure verticale.

Symétriquement par rapport à la normale au miroir M, on réalise un second coupleur directif $C_2$ identique au premier. Ce système est évidemment formé en même temps que le coupleur $C_1$ et le miroir M, au moyen d'un jeu de masques et par la gravure des couches.

On prévoira de prolonger le guide $G_1$ en $G''_1$, et de prolonger le symétrique du guide $G_1$ en $G'_1$ au-delà de la longueur de couplage L, alors que le guide supérieur $G_2$ et son symétrique $G'_2$ sont limités à la longueur de couplage L.

Selon la puissance d'entrée $\phi_0$, un faisceau entrant dans $G_1$, ou bien sortira par l'extrémité $G''_1$ prolongement du guide d'entrée $G_1$ avec une puissance $\phi_1$, ou bien passera dans $G_2$. Dans ce dernier cas, il sera réfléchi par le miroir M, et passera dans le symétrique $G'_2$ de $G_2$. Du fait que le coupleur $C_2$ est prévu d'une longueur L correspondant à une sortie croisée, dans l'état de polarisation zéro, le signal passera dans $G'_1$ et sera ensuite véhiculé par le prolongement de $G'_1$ avec une puissance $\phi_2$.

Ainsi conçue, cette structure nécessitera donc seulement la réalisation de contacts électriques de polarisation pour le premier coupleur $C_1$ et non pas pour le second. Les contacts électriques seront donc réalisés soit seulement sur les couches 3 extrêmes de $C_1$ (si $C_1$ est constitué selon les exemples II, III, V) soit sur les couches N et P de $C_1$ (si $C_1$ et constitué selon l'exemple I). Les éléments formés de $C_1+C_2$ sont directement cascadables. Il sont dits éléments de base.

On pourra alors réaliser une matrice de commutation de Q dans Q guides, en plaçant QxQ de ces éléments de base en cascade dans deux directions du plan d'un substrat.

D'une façon préférentielle, le miroir M est réalisé à 45° de l'axe optique du premier coupleur C$_1$. Les deux coupleurs C$_1$, C$_2$ sont donc dans des directions orthogonales.

**Revendications**

1. Dispositif semiconducteur intégré formant un commutateur optoélectronique qui comprend d'une part une structure de coupleur directif comprenant à l'entrée deux guides de lumière (G1, G2) dans laquelle l'un des guides (G1) reçoit la puissance lumineuse d'entrée et l'autre guide (G2) est formé de multipluits quantiques, structure dont les dimensions sont telles qu'en l'absence d'action électrique extérieure le commutateur est dans l'état croisé, et d'autre part des moyens de commande de la commutation (Vo, R), caractérisé en ce que :
   - d'une part la structure comprend des couches (1, 2, 3, 4, 5) formant au moins une structure PIN dans laquelle le guide formé de multipuits quantiques (G2) constitue une région intrinsèque I,
   - et d'autre part les moyens de commande incluent des moyens (Vo, R) de polarisation électrique en inverse de la structure PIN agissant en contre-réaction pour obtenir que la commutation d'un état dans l'autre soit initiée par un changement de niveau de la puissance lumineuse ($\Phi$o) injectée dans le guide d'entrée (G1).

2. Dispositif selon la revendication 1, caractérisé en ce qu'il comprend une seconde structure PIN (11, 12, 3, Fig 1b) dont le guide d'entrée (G1) constitue la région intrinsèque et qui est polarisée en direct.

3. Dispositif selon la revendication 2, caractérisé en ce que le guide d'entrée (G1) est aussi formé de multipuits quantiques.

4. Dispositif selon l'une des revendications 1 à 3, caractérisé en ce que la structure du coupleur directif est de type vertical et comprend une couche de séparation (3, fig 1d) d'un premier type de conductivité disposée entre les deux guides (G1, G2), et des première (1) et seconde (5) couches de confinement d'un second type de conductivité opposé disposées de part et d'autre des guides.

5. Dispositif selon l'une des revendications 1 à 3, caractérisé en ce que la structure du coupleur directif (C1) est de type vertical et que la couche de confinement (1) adjacente au guide d'entrée, dite première couche de confinement, et le guide d'entrée (G1) sont du même type de conductivité que la couche de séparation (3).

6. Dispositif selon la revendication 4, dans la mesure où elle dépend directement de la revendication 1, caractérisé en ce que la couche de confinement adjacente au guide d'entrée (1, Fig 1d), dite première couche de confinement, et le guide d'entrée (G1) sont du type de conductivité opposé à celui de la couche de séparation (3).

7. Dispositif selon la revendication 4, dans la mesure où cette dernière dépend de l'une des revendications 2 ou 3, caractérisé en ce que la couche de confinement (11, 1, Fig 1b, 1c, 1d) adjacente au guide d'entrée (G1) est du type de conductivité opposé à celui de la couche de séparation (3).

8. Dispositif selon l'une des revendications 4 à 7, caractérisé en ce qu'un miroir (M, fig 8) est disposé sur le trajet du guide supérieur (G2) de la structure verticale à l'extrémité de la longueur de couplage, et en ce qu'un second coupleur directif (C2) de structure et dimension identiques est disposé dans l'axe de réflexion de ce miroir.

9. Dispositif selon la revendication 8, caractérisé en ce que le miroir (M) est constitué par une interface plane perpendiculaire au plan des couches et disposée à 45° sur l'axe optique du premier coupleur directif (C1).

10. Dispositif selon l'une des revendications 4 à 9, caractérisé en ce que la couche de séparation (3) entre les deux guides (G1, G2) de la (des) structure(s) de coupleur directif, est de type de conductivité N.

11. Dispositif selon la revendication 3, caractérisé en ce que la structure du coupleur directif est de type horizontal et comprend une couche guidante (32, Fig 7) formée de multipuits quantiques pour former le guide d'entrée (G1) et le second guide (G2), de part et d'autre de laquelle sont disposées des couches inférieure

11

(31) et supérieure (35) de confinement de type de conductivité opposé, couche guidante qui constitue la région intrinsèque des deux structures PIN.

**12.** Dispositif selon la revendication 11, caractérisé en ce que la couche supérieure de confinement (35) est munie de rubans (R1, R2) érigés en relief pour délimiter le guide d'entrée (G1) et le second guide (G2).

**13.** Dispositif selon l'une des revendications 11 ou 12, caractérisé en ce que la couche de confinement inférieur (31) est de type de conductivité N.

**14.** Dispositif selon l'une des revendications précédentes caractérisé en ce qu'un contact électrique de type P est disposé sur une couche de type P, et un contact électrique de type N est disposé sur une couche de type N de chaque structure PIN.

**15.** Dispositif selon la revendication 14, caractérisé en ce que les moyens de commande comprennent des moyens d'application d'une tension entre des bornes N et P définies par les contacts électriques de types N et P.

**16.** Dispositif selon la revendication 15, caractérisé en ce que les moyens de polarisation consistent en une résistance (R, fig 2a) en série avec une alimentation en tension continue (Vo) disposées entre les bornes N et P.

**17.** Dispositif selon la revendication 14, caractérisé en ce que les moyens de commande consistent en des moyens de polarisation par une alimentation en courant (I(V), fig 3a).

**18.** Dispositif selon la revendication 17, caractérisé en ce que ces moyens comprennent une diode ($\Delta$, fig 4a et 4b).

**19.** Dispositif selon la revendication 18, caractérisé en ce que ces moyens comprennent une diode photodétectrice ($\Delta$).

**20.** Dispositif selon la revendication 19 dans la mesure où cette dernière dépend de la revendication 4, caractérisé en ce que la diode photodétectrice ($\Delta$) est réalisée en surface de la structure verticale.

**21.** Dispositif selon l'une des revendications 1 à 10, caractérisé en ce que les matériaux pour faire la (les) structure(s) de multipuits quantiques (4, fig 1a à 1d, 22 fig 1c) consistent en une alternance de couches binaires et ternaires ou quaternaires de matériaux du groupe III-V.

**22.** Dispositif selon la revendication 21, caractérisé en ce que les matériaux des couches autres que les matériaux des structures MQW sont ternaires ou quaternaires.

**23.** Dispositif selon la revendication 22, caractérisé en ce que les matériaux binaires sont formés d'arséniure de gallium, GaAs, et les matériaux ternaires d'arséniure de gallium et d'aluminium, GaAlAs, le substrat (10) étant en arséniure de gallium.

**24.** Dispositif selon la revendication 23, caractérisé en ce que la concentration en aluminium du composé d'arsenic de gallium et d'aluminium éventuellement dans les MQW est 0,3, en ce que dans l'autre guide s'il est non MQW, la concentration en aluminium est 0,11, et dans les autres couches, la concentration en aluminium est 0,16.

**25.** Dispositif selon la revendication 24, caractérisé en ce que l'épaisseur des guides (G1, G2) pour obtenir la propagation d'une onde monomode est 0,6 $\mu$m.

**26.** Dispositif selon la revendication 24, caractérisé en ce que pour le fonctionnement à une longueur d'onde (3) de 865 nm, l'épaisseur de la couche de séparation est D= 1$\mu$m et la longueur de couplage des guides de lumière (G1, G2) dans le cas d'un seul guide à MQW est L=288 $\mu$m.

**27.** Dispositif selon la revendication 22, caractérisé en ce que les matériaux binaires sont le phosphure d'indium, InP, les matériaux ternaires l'arséniure de gallium et d'indium, GaInAs, et les matériaux quaternaires éventuellement, un composé d'arsenic, indium, phosphore, gallium, le substrat étant en phosphure d'indium, InP.

28. Utilisation du dispositif selon l'une des revendications 14 ou 15, pour commuter un signal porteur (Φo) modulé en puissance, le signal porteur restant dans le guide d'entrée (G1) lorsque sa puissance d'entrée est faible et passant d'une façon abrupte dans le second guide de lumière (G2) lorsque sa puissance d'entrée est forte.

29. Utilisation du dispositif selon l'une des revendications 17 à 20 pour effectuer la commutation bistable d'un signal, commutation commandée par un top lumineux (fig 6a) appliqué à un signal d'entrée, le signal continuant dans le même guide de lumière lorsque le top est un top de puissance négative, et le signal passant dans l'autre guide lorsque le top est un top de puissance positive, le signal se propageant alors continuement jusqu'à l'apparition d'un nouveau top, alors que le signal d'entrée a repris sa puissance initiale après le top de commande.

30. Dispositif semiconducteur intégré incluant une matrice de commutation formée de QXQ dispositifs commutateurs optoélectroniques selon l'une des revendications précédentes, dans la mesure où chacune d'elles dépend de l'une des revendications 8 ou 11, ces dispositifs étant montés en cascade dans deux directions du plan du substrat.

## Patentansprüche

1. Integrierte Halbleiteranordnung, die einen optoelektronischen Schalter bildet und einerseits eine Richtkopplerstruktur mit zwei eingangsseitigen Lichtleitern ($G_1$, $G_2$), von denen der eine ($G_1$) die Eingangslichtleistung empfängt und der andere ($G_2$) von Mehrfachquantensenken gebildet wird, wobei die Merkmale der Struktur so gewählt sind, daß in Abwesenheit einer elektrischen Einwirkung von außen der Schalter sich in einem Zustand gekoppelter Strecken befindet, und mit Steuermitteln ($V_0$, R) für die Umschaltung, dadurch gekennzeichnet, daß
   - einerseits die Struktur Schichten (1, 2, 3, 4, 5) enthält, die mindestens eine PIN-Struktur bilden, in der der aus Vielfachquantensenken gebildete Lichtleiter ($G_2$) eine intrinsische Zone I bildet,
   - und andererseits die Steuermittel Mittel ($V_0$, R) enthalten, die eine als Gegenkopplung wirkende elektrische Vorspannung in Gegenrichtung an die PIN-Struktur anlegen, um die Umschaltung von einem Zustand in den anderen durch eine Änderung des Leistungspegels ($\Phi_0$) des in den Eingangslichtleiter ($G_1$) eingespeisten Lichts zu veranlassen.

2. Anordnung nach Anspruch 1, dadurch gekennzeichnet, daß sie eine zweite PIN-Struktur (11, 12, 3, Figur 1b) enthält, deren Eingangslichtleiter ($G_1$) die intrinsische Zone bildet und in Vorwärtsrichtung vorgespannt ist.

3. Anordnung nach Anspruch 2, dadurch gekennzeichnet, daß der Eingangslichtleiter ($G_1$) ebenfalls aus Mehrfachquantensenken besteht.

4. Anordnung nach einem der Ansprüche 1 bis 3, dadurch gekennzeichnet, daß die Struktur des Richtkopplers eine vertikale Struktur ist und eine Trennschicht (3, Fig. 1d) eines ersten Leitfähigkeitstyps, die zwischen den beiden Lichtleitern ($G_1$, $G_2$) liegt, sowie eine erste und eine zweite Einschließungsschicht (1, 5) eines zweiten entgegengesetzten Leitfähigkeitstyps enthält, die zu beiden Seiten der Lichtleiter verlaufen.

5. Anordnung nach einem der Ansprüche 1 bis 3, dadurch gekennzeichnet, daß die Struktur des Richtkopplers ($C_1$) eine vertikale Struktur ist und daß die dem Eingangslichtleiter benachbarte Einschließungsschicht (1), erste Einschließungsschicht genannt, und der Eingangslichtleiter ($G_1$) den gleichen Leitfähigkeitstyp wie die Trennschicht (3) besitzen.

6. Anordnung nach Anspruch 4, soweit er unmittelbar von Anspruch 1 abhängt, dadurch gekennzeichnet, daß die dem Eingangslichtleiter benachbarte Einschließungsschicht (1, Figur 1d), erste Einschließungsschicht genannt, und der Eingangslichtleiter ($G_1$) den entgegengesetzten Leitfähigkeitstyp besitzen, bezogen auf den der Trennschicht (3).

7. Anordnung nach Anspruch 4, soweit er von einem der Ansprüche 2 oder 3 abhängt, dadurch gekennzeichnet, daß die dem Eingangslichtleiter ($G_1$) benachbarte Einschließungsschicht (11, 1, Figur 1b, 1c, 1d) den entgegengesetzten Leitfähigkeitstyp besitzt, bezogen auf den der Trennschicht (3).

8. Anordnung nach einem der Ansprüche 4 bis 7, dadurch gekennzeichnet, daß ein Spiegel (M, Figur 8) im Verlauf des oberen Lichtleiters ($G_2$) der vertikalen Struktur am Ende der Kopplungslänge angeordnet ist und daß ein zweiter Richtkoppler ($C_2$) mit gleicher Struktur und Abmessung in der Reflexionsachse dieses Spiegels liegt.

9. Anordnung nach Anspruch 8, dadurch gekennzeichnet, daß der Spiegel (M) aus einer ebenen Schnittfläche besteht, die senkrecht zur Ebene der Schichten und unter 45° zur optischen Achse des ersten Richtkopplers ($C_1$) verläuft.

10. Anordnung nach einem der Ansprüche 4 bis 9, dadurch gekennzeichnet, daß die Trennschicht (3) zwischen den beiden Lichtleitern ($G_1$, $G_2$) der Richtkopplerstruktur bzw. -strukturen den Leitfähigkeitstyp N besitzt.

11. Anordnung nach Anspruch 3, dadurch gekennzeichnet, daß die Struktur des Richtkopplers eine horizontale Struktur ist und eine lichtführende Schicht (32, Figur 7) enthält, die von Mehrfachquantensenken gebildet wird, und den Eingangslichtleiter ($G_1$) sowie den zweiten Lichtleiter ($G_2$) bildet, wobei zu beiden Seiten dieser Schicht untere und obere Einschließungsschichten (31, 35) des entgegengesetzten Leitfähigkeitstyps angeordnet sind und die lichtführende Schicht die intrinsische Zone der beiden PIN-Strukturen darstellt.

12. Anordnung nach Anspruch 11, dadurch gekennzeichnet, daß die obere Einschließungsschicht (35) Bänder ($R_1$, $R_2$) enthält, die reliefartig vorstehen, um den Eingangslichtleiter ($G_1$) und den zweiten Lichtleiter ($G_2$) zu begrenzen.

13. Anordnung nach einem der Ansprüche 11 oder 12, dadurch gekennzeichnet, daß die untere Einschließungsschicht (31) den Leitfähigkeitstyp N besitzt.

14. Anordnung nach einem der vorhergehenden Ansprüche, dadurch gekennzeichnet, daß ein elektrischer Kontakt des Typs P auf einer Schicht des Typs P und ein elektrischer Kontakt des Typs N auf einer Schicht des Typs N jeder PIN-Struktur angebracht ist.

15. Anordnung nach Anspruch 14, dadurch gekennzeichnet, daß die Steuermittel Mittel zum Anlegen einer Spannung zwischen die Klemmen N und P enthalten, die durch die elektrischen Kontakte des Typs N und P gebildet werden.

16. Anordnung nach Anspruch 15, dadurch gekennzeichnet, daß die Vorspannungsmittel aus einem Widerstand (R, Figur 2a) in Reihe mit einer Gleichspannungsquelle ($V_0$) bestehen, die zwischen den Klemmen N und P angeschlossen sind.

17. Anordnung nach Anspruch 14, dadurch gekennzeichnet, daß die Steuermittel aus Mitteln bestehen, die einen Strom (I(V), Figur 3a) einspeisen.

18. Anordnung nach Anspruch 17, dadurch gekennzeichnet, daß diese Mittel eine Diode ($\Delta$, Figur 4a und Figur 4b) enthalten.

19. Anordnung nach Anspruch 18, dadurch gekennzeichnet, daß diese Mittel eine Fotodetektordiode ($\Delta$) enthalten.

20. Anordnung nach Anspruch 19, soweit dieser von Anspruch 4 abhängt, dadurch gekennzeichnet, daß die Fotodetektordiode ($\Delta$) an der Oberfläche der vertikalen Struktur ausgebildet ist.

21. Anordnung nach einem der Ansprüche 1 bis 10, dadurch gekennzeichnet, daß die Materialien zur Herstellung der Struktur bzw. Strukturen von Mehrfachquantensenken (4, Figur 1a bis 1d; 22, Figur 1c) aus einer abwechselnden Folge binärer und ternärer oder quaternärer Schichten von Materialien der Gruppe III-V bestehen.

22. Anordnung nach Anspruch 21, dadurch gekennzeichnet, daß die Materialien der Schichten mit Ausnahme der Materialien der MQW-Strukturen ternäre oder quaternäre Materialien sind.

23. Anordnung nach Anspruch 22, dadurch gekennzeichnet, daß die binären Materialien Galliumarsenid GaAs und die ternären Materialien Gallium-Aluminiumarsenid GaAlAs sind, während das Substrat (10) aus Galliumarsenid ist.

24. Anordnung nach Anspruch 23, dadurch gekennzeichnet, daß die Aluminiumkonzentration des Stoffs aus Gallium, Aluminium und Arsen, der ggf. in den Mehrfachquantensenken MQW verwendet wird, bei 0,3 liegt, und daß in dem anderen Lichtleiter, wenn dieser keine Mehrfachquantensenken enthält, die Aluminiumkonzentration bei 0,11 und in den anderen Schichten bei 0,16 liegt.

25. Anordnung nach Anspruch 24, dadurch gekennzeichnet, daß die Dicke der Lichtleiter ($G_1$, $G_2$) 0,6 μm beträgt, um eine Fortpflanzung einer Monomodewelle zu erhalten.

26. Anordnung nach Anspruch 24, dadurch gekennzeichnet, daß für den Betrieb bei einer Wellenlänge (3) von 865 nm die Dicke D der Trennschicht 1 μm beträgt und die Kopplungslänge L der Lichtleiter ($G_1$, $G_2$) 288 μm beträgt, wenn nur einer der Lichtleiter Mehrfachquantensenken MQW enthält.

27. Anordnung nach Anspruch 22, dadurch gekennzeichnet, daß die binären Materialien Indiumphosphid InP und die ternären Materialien Gallium- und Indiumarsenid GaInAs sowie ggf. die quaternären Materialien aus Arsen, Indium, Phosphor und Gallium zusammengesetzt sind, während das Substrat aus Indiumphosphid InP besteht.

28. Verwendung der Anordnung gemäß einem der Ansprüche 14 oder 15 zum Durchschalten eines leistungsmodulierten Trägersignals $\Phi_0$, wobei das Trägersignal im Eingangslichtleiter ($G_1$) verbleibt, solange seine Eingangsleistung gering ist, und plötzlich in den zweiten Lichtleiter ($G_2$) übertritt, wenn seine Eingangsleistung groß ist.

29. Verwendung der Anordnung nach einem der Ansprüche 17 bis 20 für die bistabile Durchschaltung eines Signals, wobei die Durchschaltung von einem Lichtimpuls (Figur 6a) gesteuert wird, dem ein Eingangssignal unterliegt, wobei das Signal in demselben Lichtleiter weiter verläuft, wenn der Impuls ein negativer Leistungsimpuls ist, und in den anderen Lichtleiter übertritt, wenn der Impuls ein positiver Leistungsimpuls ist, worauf das Signal bis zum Auftreten eines neuen Impulses seinen Weg nicht verändert, obwohl das Eingangssignal nach dem Steuerimpuls seinen ursprünglichen Leistungspegel wieder angenommen hat.

30. Integrierte Halbleiteranordnung mit einer Schaltmatrix, die von Q.Q optoelektronischen Schaltanordnungen gemäß einem der vorhergehenden Ansprüche gebildet wird, sofern jeder dieser Ansprüche von einem der Ansprüche 8 oder 1 abhängt, wobei diese Anordnungen in Kaskade in zwei Richtungen gemäß der Ebene des Substrats aufgebaut sind.

## Claims

1. Integrated semiconductor device forming an opto-electronic switch comprising a directional coupler structure comprising at its input two optical waveguides ($G_1$, $G_2$) in which one of the guides ($G_1$) receives the input luminous power and the other guide ($G_2$) is formed of multiple quantum wells, the dimensions of which structure are such that in the absence of external electrical action the switch is in the crossed state, and switching control means ($V_0$, R), characterised in that:
   - the structure comprises layers (1, 2, 3, 4, 5) forming at least one PIN structure in which the multiple quantum well guide ($G_2$) constitutes an intrinsic region I, and
   - the control means include means ($V_0$, R) for reverse biasing the PIN structure operative in feedback so that switching from one state to the other is initiated by a change in the luminous power ($\phi_0$) injected into the input guide ($G_1$).

2. Device according to claim 1 characterised in that it comprises a second PIN structure (11, 12, 3, Fig. 1b) whose input guide ($G_1$) constitutes the intrinsic region and which is forward biased.

3. Device according to claim 2 characterised in that the input guide (G1) is also of multiple quantum well form.

4. Device according to any one of claims 1 to 3 characterised in that the structure of the directional coupler is of the vertical type and comprises a separation layer (3, Fig. 1d) of a first type of conductivity disposed between the two guides (G$_1$, G$_2$) and first and second confinement layers (1, 5) of a second type of conductivity disposed on respective sides of the guides.

5. Device according to any one of claims 1 to 3 characterised in that the structure of the directional coupler (C$_1$) is of the vertical type and in that the confinement layer (1) adjacent the input guide, called the first confinement layer, and the input guide (G$_1$) are of the same type of conductivity as the separation layer (3).

6. Device according to claim 4 when dependent directly from claim 1 characterised in that the confinement layer adjacent the input guide (1, Fig. 1d), called the first confinement layer, and the input guide (G$_1$) have the opposite type of conductivity to the separation layer (3).

7. Device according to claim 4 when dependent on claim 2 or claim 3 characterised in that the confinement layer (11, 1, Fig. 1b, 1c, 1d) adjacent the input guide (G$_1$) has the opposite type of conductivity to the separation layer (3).

8. Device according to any one of claims 4 to 7 characterised in that a mirror (M, Fig. 8) is placed on the path of the upper guide (G$_2$) of the vertical structure at the end of the coupling length and in that a second directional coupler (C$_2$) of identical shape and size is disposed on the reflection axis of said mirror.

9. Device according to claim 8 characterised in that the mirror (M) comprises a plane interface perpendicular to the plane of the layers and disposed at 45° to the optical axis of the first directional coupler (C$_1$).

10. Device according to any one of claims 4 to 9 characterised in that the separation layer (3) between the two guides (G$_1$, G$_2$) of the directional coupler structure(s) is of the N conductivity type.

11. Device according to claim 3 characterised in that the structure of the directional coupler is of the horizontal type and comprises a guide layer (32, Fig. 7) formed of multiple quantum wells to form the input guide (G$_1$) and the second guide (G$_2$) on opposite sides of which are disposed lower and upper confinement layers (31, 35) of the opposite conductivity type, which guide layer constitutes the intrinsic region of the two PIN structures.

12. Device according to claim 11 characterised in that the upper confinement layer (35) has ribbons (R$_1$, R$_2$) upstanding in relief to delimit the input guide (G$_1$) and the second guide (G$_2$).

13. Device according to claim 11 or claim 12 characterised in that the lower confinement layer (C$_1$) is of the N conductivity type.

14. Device according to any one of the preceding claims characterised in that a P type electrical contact is disposed on a P type layer and an N type electrical contact is disposed on an N type layer of each PIN structure.

15. Device according to claim 14 characterised in that the control means comprise means for applying a voltage between N and P terminals defined by the N and P type electrical contacts.

16. Device according to claim 15 characterised in that the bias means comprise a resistor (R, Fig. 2a) in series with a direct current voltage supply (V$_0$) connected between the N and P terminals.

17. Device according to claim 14 characterised in that the control means comprise bias means including a current supply (I(V), Fig. 3a).

18. Device according to claim 17 characterised in that said means comprise a diode ($\Delta$, Fig. 4a and 4b).

19. Device according to claim 18 characterised in that said means comprise a photodetector diode ($\Delta$).

20. Device according to claim 19 when dependent on claim 4 characterised in that the photodetector diode ($\Delta$) is implemented on the surface of the vertical structure.

21. Device according to any one of claims 1 to 10 characterised in that the materials for the multiple quantum well structure(s) (4, Fig. 1a through 1d, 22, Fig. 1c) consists in alternating layers of binary and ternary or quaternary materials of group III-V.

**22.** Device according to claim 21 characterised in that the materials of layers other than the materials of the MQW structure are ternary or quaternary materials.

**23.** Device according to claim 22 characterised in that the binary materials comprise gallium arsenide GaAs and the ternary materials comprise gallium and aluminium arsenide GaAlAs, the substrate (10) being gallium arsenide.

**24.** Device according to claim 23 characterised in that the aluminium concentration of the gallium and aluminium arsenide in the MQW, if any, is 0.3 and in that in the other guide, if it is a non-MQW guide, the concentration of aluminium is 0.11 and in the other layers the concentration of aluminium is 0.16.

**25.** Device according to claim 24 characterised in that the guides ($G_1$, $G_2$) are 0.6 $\mu$m thick in order to propagate a monomode wave.

**26.** Device according to claim 24 characterised in that the thickness of the separation layer is D = 1 $\mu$m and the coupling length of the optical waveguides ($G_1$, $G_2$) in the case of a single MQW guide is L = 288 $\mu$m in order to operate at a wavelength (3) of 865 nm.

**27.** Device according to claim 22 characterised in that the binary materials are indium phosphide InP, the ternary materials are gallium and indium arsenide GaInAs and the quaternary materials, if any, are a compound of arsenic, indium, phosphorus and gallium, the substrate being indium phosphide InP.

**28.** Use of the device according to claim 14 or claim 15 to switch a carrier signal ($\phi_0$) whose power is modulated, the carrier signal remaining in the input guide ($G_1$) if its input power is low and passing suddenly into the second optical waveguide ($G_2$) if its input power is high.

**29.** Use of the device according to any one of claims 17 to 20 for bistable switching of a signal controlled by a light pulse (Fig. 6a) applied to an input signal, the signal continuing in the same optical waveguide if the pulse is a negative power pulse and the signal passing into the output guide if the pulse is a positive power pulse, the signal then propagating continuously until the occurrence of a further pulse when the input signal has been returned to its initial power after the control pulse.

**30.** Integrated semiconductor device incorporating a switching matrix formed of Q x Q opto-electronic switching devices according to any one of the preceding claims when dependent on claim 8 or claim 1, said devices being disposed in cascade in two directions of the plane of the substrate.

FIG.1a

FIG.1d

FIG.1b

FIG.1c

FIG. 2a

FIG. 2b

FIG. 2c

FIG. 2d

20

FIG. 2e

FIG. 2 f

FIG. 3a

FIG. 3b

FIG. 3c

FIG. 4a

FIG. 4b

FIG. 5a

FIG. 5b

FIG. 5c

FIG. 6a

FIG. 6b

FIG. 6c

FIG. 7

EP 0 401 925 B1

FIG. 8